# EUROPEAN PATENT SPECIFICATION

(11) **EP 2 681 857 B1**
(45) Date of publication and mention of the grant of the patent: **18.10.2017**
(21) Application number: 12752031.0
(22) Date of filing: 28.02.2012
(51) Int. Cl.: H04L 27/26

(54) **APPARATUS AND METHOD FOR REDUCING PEAK TO AVERAGE POWER RATIO (PAPR) IN BROADCASTING COMMUNICATION SYSTEM**
VORRICHTUNG UND VERFAHREN ZUR REDUKTION DES SPITZEN-DURCHSCHNITTS-LEISTUNGSVERHÄLTNISSES (PAPR) IN EINEM RUNDFUNKKOMMUNIKATIONSSYSTEM
APPAREIL ET PROCÉDÉ POUR RÉDUIRE UN RAPPORT ENTRE LA PUISSANCE CRÊTE ET LA PUISSANCE MOYENNE (PAPR) DANS UN SYSTÈME DE TÉLÉCOMMUNICATION ET DE RADIODIFFUSION

(30) Priority: 02.03.2011 KR 20110018295
(43) Date of publication of application: 08.01.2014
(73) Proprietor: Samsung Electronics Co., Ltd., Suwon-si, Gyeonggi-do, 443-742 (KR)
(72) Inventor: YUN, Sung-Ryul, Suwon-si Gyeonggi-do 443-726 (KR); JEONG, Hong-Sil, Seoul 150-782 (KR); YANG, Hyun-Koo, Seoul 135-858 (KR)
(74) Representative: Nederlandsch Octrooibureau
(86) International application number: PCT/KR2012/001499
(87) International publication number: WO 2012/118325

(56) References cited:
- EP-A2- 2 214 366
- KR-A- 20070 077 622
- KR-A- 20080 106 834
- US-A1- 2010 034 219
- US-A1- 2010 329 401
- S.HAN ET AL.: 'AN OVERVIEW OF PEAK-TO-AVERAGE POWER RATIO REDUCTION TECHNIQ UES FOR MULTICARRIER TRANSMISSION' IEEE WIRELESS COMMUNICATIONS April 2005, XP055126782

## Description

### Technical Field

The present invention relates generally to an apparatus and a method for reducing a Peak to Average Power Ratio (PAPR) in a broadcasting communication system, and more particularly, to an apparatus and a method for reducing the PAPR in the broadcasting communication system by adopting a data slicing scheme.

### Background Art

Typically, a broadcasting communication system provides a broadcasting communication service having a high transfer rate and various levels of Quality of Service (QoS) according to user's demands. For example, to service the high transfer rate and the various QoS levels, the broadcasting communication system employs Orthogonal Frequency Division Multiplexing (OFDM). Herein, the OFDM is a multi-carrier transmission method that transmits data over a plurality of subcarriers arranged to maintain orthogonality. Hence, the OFDM exhibits high frequency utilization and robustness against multi-path fading.

Due to the advantages described above, the OFDM technique has been adopted as the standard of large-scale broadcasting systems such as Digital Audio Broadcasting (DAB) and Digital Video Broadcasting (DVB) in Europe, as well as the standard of communication systems of Long Term Evolution (LTE). To remove a high Peak to Average Power Ratio (PAPR) in multi-carrier modulation, the broadcasting communication system uses a PAPR reduction technique such as tone reservation and Active Constellation Extension (ACE).

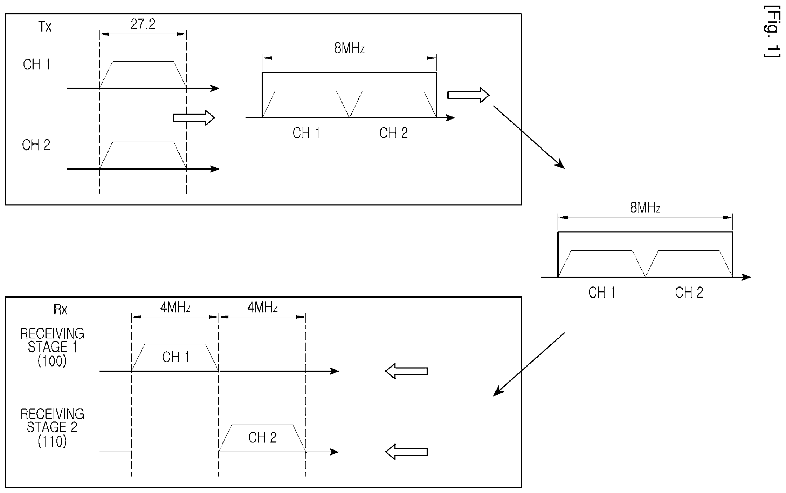

The broadcasting communication system can transmit a broadcasting signal using a data slicing scheme as shown in FIG. 1.

FIG. 1 depicts a broadcasting signal according to data slicing in a general broadcasting communication system.

Using the data slicing in FIG. 1, a transmitting stage divides the whole broadcasting band into at least two channel bands and provides the broadcasting service over the respective channels. For example, when the whole broadcasting band is 8MHz, the transmitting stage divides the whole broadcasting band into two channel bands of 4MHz. The transmitting stage can provide different broadcasting services over channel 1 and channel 2.

To transmit the broadcasting signal, the transmitting stage combines the broadcasting signals of the respective channels as a single integrated broadcast signal and sends the integrated signal to a receiving stage.

Receiving stages only receive the signal of the broadcasting service band through Radio Frequency (RF) tuning. For example, a first receiving stage 100 restores the broadcasting data received over channel 1 of 4MHz, and a second receiving stage 110 restores the broadcasting data received over channel 2 of 4MHz.

When the broadcasting communication system using the data slicing scheme adopts the OFDM, it is necessary to reduce the PAPR per channel for providing the broadcasting service in the broadcasting communication system. EP 2214366 A2 relates to a Digital Video Broadcasting-Cable (DVB-C) system and a processing method for reserved tones, wherein a receiver detects the reception of a broadcast signal, then the receiver removes reserved tones from a broadcast signal.

### Disclosure of Invention

### Technical Problem

The present invention has been made to address at least the above problems and/or disadvantages and to provide at least the advantages described below. Accordingly, an aspect of the present invention provides an apparatus and a method for reducing a PAPR in a broadcasting communication system.

Another aspect of the present invention provides an apparatus and a method for reducing a PAPR in a broadcasting communication system adopting a data slicing scheme.

Yet another aspect of the present invention provides an apparatus and a method for reducing a PAPR using tone reservation in a broadcasting communication system adopting a data slicing scheme.

Still another aspect of the present invention provides an apparatus and a method for reducing a PAPR per channel band in a broadcasting communication system adopting a data slicing scheme.

According to an aspect of the present invention, a method is provided for transmitting a broadcasting signal at a transmitting stage in a broadcasting communication system, which provides a broadcasting service by dividing a broadcasting band into at least two channel bands. At least one primary reservation tone is injected into broadcasting signals of each of the at least two channel bands. An integrated broadcasting signal of the broadcasting band is generated by combining broadcasting signals of the at least two channel bands. At least one secondary reservation tone is injected into the integrated broadcasting signal of the broadcasting band and the integrated broadcasting signal is transmitted.

According to another aspect of the present invention, an apparatus is provided for transmitting a broadcasting signal at a transmitting stage in a broadcasting communication system, which provides a broadcasting service by dividing a broadcasting band into at least two channel bands. The apparatus includes a first PAPR remover for injecting at least one primary reservation tone into broadcasting signals of each of the at least two channel bands. The apparatus also includes a multiplexer for generating an integrated broadcasting signal of the broadcasting band by combining the broadcasting signals of the channel bands. The apparatus further includes a second PAPR remover for injecting at least one secondary reservation tone into the integrated broadcasting signal of the broadcasting band.

According to yet another aspect of the present invention, a method is provided for receiving a broadcasting signal in a receiving stage in a broadcasting communication system, which provides a broadcasting service by dividing a broadcasting band into at least two channel bands. A channel band of the broadcasting service is identified. When the broadcasting signal is received over the channel band, at least one reservation tone is removed from the broadcasting signal. Broadcasting data is restored from the broadcasting signal with the at least one reservation tone removed.

According to a further aspect of the present invention, an apparatus is provided for receiving a broadcasting signal at a receiving stage in a broadcasting communication system, which provides a broadcasting service by dividing a broadcasting band into at least two channel bands. The apparatus includes a receiver for receiving the broadcasting signal over one of the at least two channel bands. The apparatus also includes a reservation tone remover for removing at least one reservation tone from the broadcasting signal received through the receiver. The apparatus further includes a decoder for restoring broadcasting data from the broadcasting signal with the at least one reservation tone removed.

### Brief Description of Drawings

The above and other aspects, features, and advantages of the present invention will be more apparent from the following description when taken in conjunction with the accompanying drawings, in which:
FIG. 1 is a diagram illustrating a broadcasting signal according to data slicing in a general broadcasting communication system;
FIG. 2 is a flowchart illustrating a method for reducing a PAPR in a broadcasting communication system, according to an embodiment of the present invention;
FIG. 3 is a flowchart illustrating a method for reducing the PAPR in the broadcasting communication system, according to another embodiment of the present invention;
FIG. 4 is a flowchart illustrating a method for receiving a broadcasting signal in the broadcasting communication system, according to an embodiment of the present invention;
FIG. 5 is a diagram illustrating a transmitting stage in the broadcasting communication system, according to an embodiment of the present invention;
FIG. 6 is a diagram illustrating a transmitting stage in the broadcasting communication system, according to another embodiment of the present invention;
FIG. 7 is a diagram illustrating a receiving stage in the broadcasting communication system, according to an embodiment of the present invention; and
FIG. 8 is a graph illustrating a performance change, according to an embodiment of the present invention.

### Best Mode for Carrying out the Invention

Embodiments of the present invention are described in detail with reference to the accompanying drawings. The same or similar components are designated by the same or similar reference numerals although they are illustrated in different drawings. Detailed descriptions of constructions or processes known in the art may be omitted to avoid obscuring the subject matter of the present invention.

The terms and words used in the following description and claims are not limited to their dictionary meanings, but are merely used by the inventor to enable a clear and consistent understanding of the invention. Accordingly, it should be apparent to those skilled in the art that the following description of embodiments of the present invention is provided for illustration purposes only and not for the purpose of limiting the invention.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

Embodiments of the present invention provide a technique for reducing a PAPR in a broadcasting communication system.

Hereinafter, it is assumed that the broadcasting communication system adopts a data slicing scheme that divides the whole broadcasting band into at least two channel bands and provides a broadcasting service over the respective channels as shown in FIG. 1. However, the present invention is equally applicable to a broadcasting communication system using a plurality of channel bands.

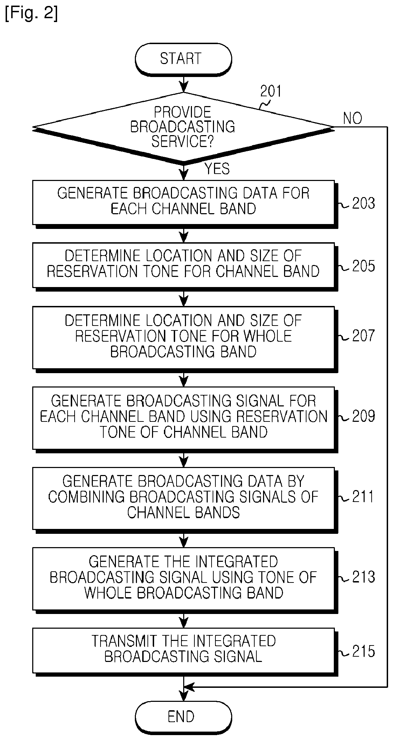

It is assumed that the broadcasting communication system adopts a tone reservation scheme to reduce the PAPR. For example, to reduce the PAPR, a transmitting stage of the broadcasting communication system operates using the tone reservation scheme as shown in FIG. 2.

FIG. 2 is a flowchart illustrating a method for reducing a PAPR in a broadcasting communication system, according to an embodiment of the present invention.

Referring to FIG. 2, it is determined whether the broadcasting service is to be provided, in step 201. When the broadcasting service is not to be provided, the methodology terminates. When the broadcasting service is to be provided, the transmitting stage generates the broadcasting data of the broadcasting service that is to be provided over the respective channel bands, in step 203. For example, when the broadcasting band includes two channel bands and different broadcasting services are provided over the respective channel bands, the transmitting stage generates the broadcasting data for transmission over the first channel band and the broadcasting data for transmission over the second channel band.

In step 205, the transmitting stage determines a location and a size of a reservation tone for each channel band in order to reduce the PAPR, which is also referred to as a primary reservation tone herein. For example, the transmitting stage determines the location of the reservation tone such that a pilot does not overlap with the reservation tone in each channel band.

In step 207, the transmitting stage determines a location and a size of a reservation tone for the whole broadcasting band in order to reduce the PAPR, which is also referred to as a secondary reservation tone herein. Herein, the reservation tone of the channel band and the reservation tone of the whole broadcasting band may have different sizes at different locations, the same size at different locations, or different sizes at the same location.

In step 209, the transmitting stage generates a broadcasting signal for each channel band by injecting the reservation tone and the broadcasting data into the channel band. Specifically, the transmitting stage generates the broadcasting signal for transmission over each channel band by injecting the broadcast data into a part excluding the reservation tone and the pilot, and injecting the reservation tone of the determined size at the location of the reservation tone. For example, the transmitting stage injects the broadcasting data into a corresponding region and applies Inverse Fast Fourier Transform (IFFT). The transmitting stage then injects the reservation tone into the time-domain signal generated through the IFFT and thereby generates the broadcasting signal of each channel band.

In step 211, the transmitting stage generates integrated broadcasting data by combining the broadcasting signals of the channel bands. For example, the transmitting stage generates the integrated broadcasting data by multiplexing the broadcasting signals of the channel bands using frequency division.

In step 213, the transmitting stage generates the integrated broadcasting signal taking into consideration the determined location and size of the reservation tone of the whole broadcasting band. For example, the transmitting stage generates the integrated broadcasting signal by injecting the reservation tone of a corresponding size at the location of the reservation tone, as determined in step 207.

In step 215, the transmitting stage transmits the integrated broadcasting signal to a service area.

Although not illustrated, the transmitting stage may transmit control information to a receiving stage. The control information includes the location and size information of the reservation tones of the channel band and the whole broadcasting band.

In this embodiment of the present invention, the transmitting stage generates the broadcasting data of the channel bands and then determines the locations and the sizes of the reservation tones for the channel band and the whole broadcasting band. In so doing, the locations and the sizes of the reservation tones for the channel band and the whole broadcasting band can be determined in parallel, or the location and the size of the reservation tone of the whole broadcasting band can be determined first.

Alternatively, the transmitting stage may determine the locations and the sizes of the reservation tones for the channel band and the whole broadcasting band, and then generate the broadcasting data of the channel bands. In so doing, the location and the size of the reservation tone for the channel band may be determined first, the location and the size of the reservation tone of the whole broadcasting band may be determined first, or the locations and the sizes of the reservation tones for the channel band and the whole broadcasting band can be determined in parallel.

Alternatively, the transmitting stage may generate the broadcasting data of the channel bands, determine the location and the size of the reservation tone for the channel band, generate the integrated broadcasting data, and then determine the location and the size of the reservation tone of the whole broadcasting band.

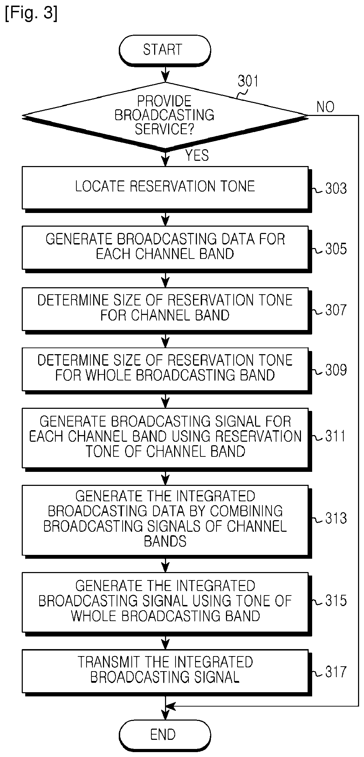

As described above, the transmitting stage injects the reservation tone into the broadcasting signal to reduce the PAPR. When the location of the reservation tone is predetermined, the transmitting stage can operate as shown in FIG. 3.

FIG. 3 is a flowchart illustrating a method for reducing the PAPR in the broadcasting communication system, according to another embodiment of the present invention.

In step 301, it is determined whether the broadcasting service is to be provided. When the broadcasting service is not to be provided, the methodology terminates. When the broadcasting service is to be provided, the transmitting stage locates the preset reservation tone to be injected into the broadcasting signal in order to reduce the PAPR, in step 303. For example, the transmitting stage locates the position for injecting the reservation tone into the broadcasting signals of the channel bands, and the position for injecting the reservation tone into the broadcasting signal of the whole broadcasting band.

In step 305, the transmitting stage generates the broadcasting data for the broadcasting service to be provided over the respective channel bands. For example, when the broadcasting band includes two channel bands and different broadcasting services are provided over the respective channel bands, the transmitting stage generates the broadcasting data for transmission over the first channel band and the broadcasting data for transmission over the second channel band.

In step 307, the transmitting stage determines sizes of the reservation tones for the channel bands in order to reduce the PAPR.

In step 309, the transmitting stage determines a size of the reservation tone for the whole broadcasting band in order to reduce the PAPR. Herein, the reservation tone of the channel band and the reservation tone of the whole broadcasting band may have the same or different sizes. Accordingly, the reservation tone of the channel band and the reservation tone of the whole broadcasting band may have different sizes at different locations, the same size at different locations, or different sizes at the same location.

In step 311, the transmitting stage generates a broadcasting signal for each channel band by injecting the reservation tone and the broadcasting data into the channel band. Specifically, the transmitting stage generates the broadcasting signal for transmission over each channel band by injecting the broadcast data into a part excluding the reservation tone and the pilot, and injecting the reservation tone of a determined size at a position of the reservation tone. For example, the transmitting stage injects the broadcasting data into the corresponding region and applies the IFFT. The transmitting stage then injects the reservation tone into the time-domain signal generated through the IFFT and thus, generates the broadcasting signal of each channel band.

In step 313, the transmitting stage generates integrated broadcasting data by combining the broadcasting signals of the channel bands. For example, the transmitting stage generates the integrated broadcasting data by multiplexing the broadcasting signals of the channel bands using frequency division.

In step 315, the transmitting stage generates the integrated broadcasting signal taking into consideration the determined location and size of the reservation tone of the whole broadcasting band. For example, the transmitting stage generates the integrated broadcasting signal by injecting the reservation tone of the determined size, of step 309, at the predetermined position of the reservation tone.

In step 317, the transmitting stage transmits the integrated broadcasting signal to a service area.

Although not illustrated, when the transmitting stage and the receiving stage share the locations of the reservation tones of the channel bands and the whole broadcasting band, the transmitting stage may transmit control information to the receiving stage. Herein, the control information includes the size information of the reservation tones of the channel bands and the whole broadcasting band.

In this embodiment of the present invention, the transmitting stage generates the broadcasting data of the channel bands and then determines the sizes of the reservation tones for the channel bands and the whole broadcasting band. In so doing, the sizes of the reservation tones for the channel bands and the whole broadcasting band can be determined in parallel, or the size of the reservation tone of the whole broadcasting band can be determined first.

Alternatively, the transmitting stage may determine the sizes of the reservation tones for the channel bands and the whole broadcasting band, and then generate the broadcasting data of the channel bands. In so doing, the size of the reservation tone for the channel band may be determined first, the size of the reservation tone of the whole broadcasting band may be determined first, or the sizes of the reservation tones for the channel band and the whole broadcasting band can be determined in parallel.

Alternatively, the transmitting stage may generate the broadcasting data of the channel bands, determine the size of the reservation tone for the channel band, generate the integrated broadcasting data, and then determine the size of the reservation tone of the whole broadcasting band.

In FIGS. 2 and 3, the transmitting stage generates the broadcasting signals of the channel bands using the reservation tone of the channel band, and generates the integrated broadcasting signal by injecting the reservation tone of the whole broadcasting band into the integrated broadcasting data generated by combining the broadcasting signals of the channel bands.

Alternatively, the transmitting stage may generate the broadcasting signals of the channel bands using the reservation tone of the channel band and the reservation tone of the whole broadcasting band, and generate the integrated broadcasting signal by combining the broadcasting signals of the channel bands.

Alternatively, the transmitting stage generates the broadcasting signals of the channel bands, and generates the integrated broadcasting signal by uniting the broadcasting signals of the channel bands. Next, the transmitting stage may generate a final broadcasting signal by injecting the reservation tone of the channel band and the reservation tone of the whole broadcasting band into the integrated broadcasting signal. In so doing, the transmitting stage may delete the broadcasting data at the location of the reservation tone and inject the reservation tone instead.

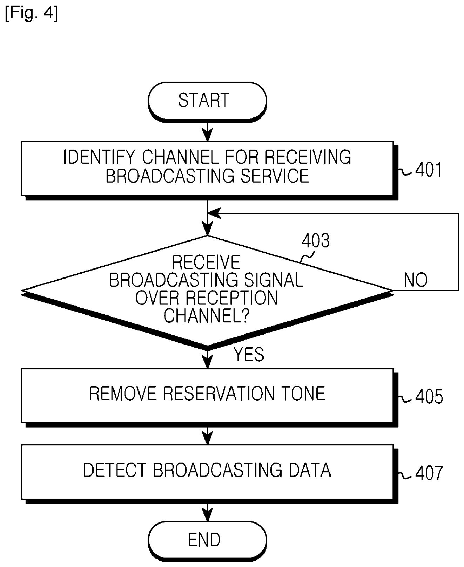

FIG. 4 is a flowchart illustrating a method for receiving the broadcasting signal in the broadcasting communication system, according to an embodiment of the present invention.

In step 401, the receiving stage identifies the channel band of the broadcasting service to be provided to a user, from the whole broadcasting band. For example, according to channel band information predetermined for the broadcasting service, the receiving stage identifies the channel band of the broadcasting service to be provided to the user. The receiving stage can identify the channel band of the broadcasting service to be provided to the user according to the control information received from the transmitting stage.

In step 403, the receiving stage determines whether the broadcasting signal is received over the identified channel band. For example, the receiving stage tunes a Radio Frequency (RF) processor to receive only the signal of the identified channel band, and thus, checks whether the broadcasting signal is received over the corresponding channel.

When the broadcasting signal is received, the receiving stage removes the reservation tone in the broadcasting signal, in step 405. For example, the receiving stage applies FFT to the broadcasting signal and then removes the reservation tone. In so doing, the receiving stage removes the reservation tone at the preset location or at the location identified in the control information received from the transmitting stage. Herein, the reservation tone removed by the receiving stage can be the reservation tone of the channel band, the reservation tone of the whole band, or the combination of the reservation tone of the channel band and the reservation tone of the whole broadcasting band.

In step 407, the receiving stage detects the broadcasting data. The receiving stage can play the detected broadcasting data.

A structure of the transmitting stage for reducing the PAPR of the broadcasting signal is described in greater detail below.

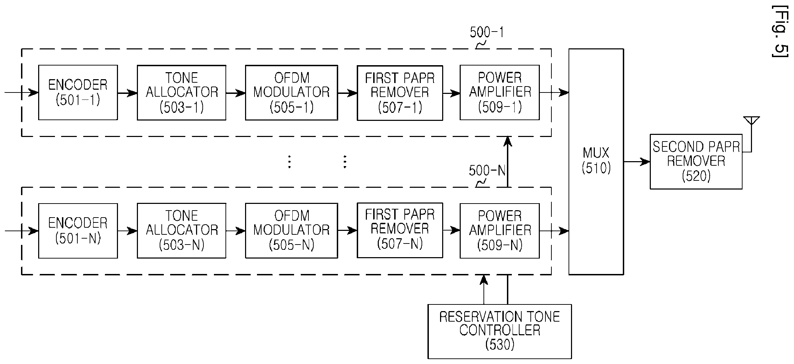

FIG. 5 is a block diagram illustrating a transmitting stage in the broadcasting communication system, according to an embodiment of the present invention.

As shown in FIG. 5, the transmitting stage includes a plurality of transmitters 500-1 through 500-N, a multiplexer (MUX) 510, a second PAPR remover 520, and a reservation tone controller 530.

The transmitters 500-1 through 500-N generate the broadcasting signal to transmit over each channel band. The transmitters 500-1 through 500-N have the same block structure. Hence, the first transmitter 500-1 of the transmitters 500-1 through 500-N described in detail below.

The first transmitter 500-1 includes an encoder 501-1, a tone allocator 503-1, an OFDM modulator 505-1, a first PAPR remover 507-1, and a power amplifier 509-1.

The encoder 501-1 generates data symbols by channel-encoding and modulating the broadcasting data for transmission over the corresponding channel band.

The tone allocator 503-1 generates the signal such that the tone without information is positioned at the location of the reservation tone determined by the reservation tone controller 530 in the signal input to the OFDM modulator 505-1. In the signal generated by the tone allocator 503-1, the broadcasting data or the pilot is allocated to the tone excluding the location of the reservation tone.

The OFDM modulator 505-1 applies the IFFT to the signal output from the tone allocator 503-1.

The first PAPR remover 507-1 injects the reservation tone into the time-domain signal output from the OFDM modulator 505-1 to reduce the PAPR. The first PAPR remover 507-1 injects the reservation tone of the size determined by the reservation tone controller 530 into the location of the reservation tone determined by the reservation tone controller 530.

The power amplifier 509-1 amplifies and outputs the power of the broadcasting signal so as to transmit the broadcasting signal output from the first PAPR remover 507-1 to the receiving stage through the radio resource.

To reduce the PAPR, the reservation tone controller 530 determines the location and the size of the reservation tone for injection into the broadcasting signal transmitted by the transmitting stage. The reservation tone controller 530 determines the location and the size of the reservation tone for injection into the broadcasting signal of each channel band and the integrated broadcasting signal of the whole broadcasting band. For example, when the location of the reservation tone for injection into the broadcasting signal of each channel band and the integrated broadcasting signal of the whole broadcasting band is preset, the reservation tone controller 530 may determine only the size of the reservation tone for injection into the broadcasting signal of each channel band and the integrated broadcasting signal of the whole broadcasting band.

The MUX 510 generates the integrated broadcasting signal by multiplexing the broadcasting signals of the channel bands output from the plurality of the transmitters 500-1 through 500-N. The MUX 510 may multiplex the broadcasting signals of the channel bands using frequency division.

The second PAPR remover 520 injects the reservation tone into the integrated broadcasting signal, which is output from the MUX 510, in order to reduce the PAPR. The second PAPR remover 520 injects the reservation tone of the size determined by the reservation tone controller 530 into the location of the reservation tone determined by the reservation tone controller 530.

Although not illustrated, the transmitting stage further includes a transmitting means for transmitting control information to a receiving stage. The control information includes, for example, the location and size information of the reservation tones of the channel band and the whole broadcasting band.

As described above, the transmitting stage includes the plurality of the transmitters 500-1 through 500-N for transmitting the signal over the respective frequencies.

Alternatively, the transmitting stage may include only a single transmitter for processing the broadband signal. For example, in this embodiment of the present invention, the transmitting stage would include the first transmitter 500-1, the MUX 510, the second PAPR remover 520, and the reservation tone controller 530. The transmitting stage would include an RF processor for dividing the frequency band to generate the broadcasting signal per channel band. Herein, the RF processor up-converts the baseband signal to the RF signal.

Alternatively, the transmitting stage may include a plurality of RF processers in one transmitter. In this embodiment of the present invention, the first transmitter 500-1 would include the single encoder 501-1, the single tone allocator 503-1, the single OFDM modulator 505-1, the single first PAPR remover 507-1, the single power amplifier 509-1, and the plurality of the RF processors per channel band. The first transmitter 500-1 would also include a switch for interconnecting the power amplifier 509-1 and the RF processors.

As described in the embodiment of the present invention shown in FIG. 5, the transmitting stage injects the reservation tone of the channel band into the broadcasting signal of the channel band using the first PAPR remover 507-1, and injects the reservation tone of the whole broadcasting band into the broadcasting signal of the whole broadcasting band using the second PAPR remover 520.

Alternatively, the transmitting stage may inject the reservation tone of the channel band and the reservation tone of the whole broadcasting band into the broadcasting signal of the channel band using the first PAPR remover 507-1. In so doing, the transmitting stage would not include the second PAPR remover 520.

Alternatively, the transmitting stage may inject the reservation tone of the channel band and the reservation tone of the whole broadcasting band into the integrated broadcasting signal output from the MUX 510 using the second PAPR remover 520. In so doing, the transmitters 500-1 through 500-N of the transmitting stage would not include the first PAPR removers 507-1 through 507-N.

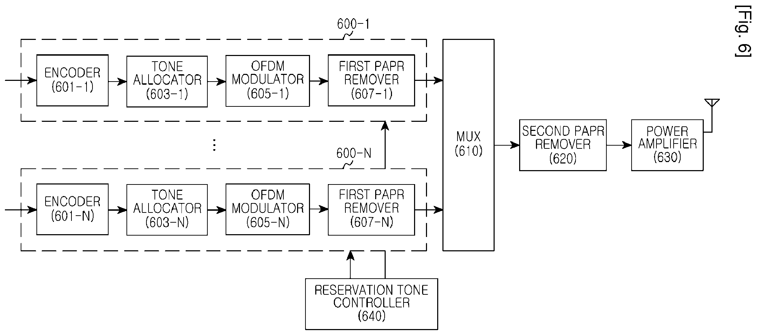

As described above with respect to FIG. 5, the transmitting stage includes separate power amplifier per transmitter. However, the transmitting stage may also include only a single power amplifier as shown in FIG. 6.

FIG. 6 is a block diagram illustrating a transmitting stage in the broadcasting communication system, according to another embodiment of the present invention.

As shown in FIG. 6, the transmitting stage includes a plurality of transmitters 600-1 through 600-N, a MUX 610, a second PAPR remover 620, a power amplifier 630, and a reservation tone controller 640.

The transmitters 600-1 through 600-N generate the broadcasting signal for transmission over each channel band. The transmitters 600-1 through 600-N have the same block structure. Hence, the first transmitter 600-1 of the transmitters 600-1 through 600-N is described in detail below.

The first transmitter 600-1 includes an encoder 601-1, a tone allocator 603-1, an OFDM modulator 605-1, and a first PAPR remover 607-1.

The encoder 601-1 generates data symbols by channel-encoding and modulating the broadcasting data to transmit over the corresponding channel band.

The tone allocator 603-1 generates the signal such that the tone without information is positioned at the location of the reservation tone determined by the reservation tone controller 640 in the signal input to the OFDM modulator 605-1. In the signal generated by the tone allocator 603-1, the broadcasting data or the pilot is allocated to the tone excluding the location of the reservation tone.

The OFDM modulator 605-1 applies the IFFT to the signal output from the tone allocator 603-1.

The first PAPR remover 607-1 injects the reservation tone into the time-domain signal output from the OFDM modulator 605-1 to reduce the PAPR. The first PAPR remover 607-1 injects the reservation tone of the size determined by the reservation tone controller 640 into the location of the reservation tone determined by the reservation tone controller 640.

To reduce the PAPR, the reservation tone controller 640 determines the location and the size of the reservation tone to inject into the broadcasting signal transmitted by the transmitting stage. In so doing, the reservation tone controller 640 determines the location and the size of the reservation tone to inject into the broadcasting signal of each channel band and the integrated broadcasting signal of the whole broadcasting band. For example, when the location of the reservation tone to inject into the broadcasting signal of each channel band and the integrated broadcasting signal of the whole broadcasting band is preset, the reservation tone controller 640 may determine only the size of the reservation tone to inject into the broadcasting signal of each channel band and the integrated broadcasting signal of the whole broadcasting band.

The MUX 610 generates the integrated broadcasting signal by multiplexing the broadcasting signals of the channel bands output from the plurality of the transmitters 600-1 through 600-N. The MUX 610 can multiplex the broadcasting signals of the channel bands using the frequency division.

The second PAPR remover 620 injects the reservation tone into the integrated broadcasting signal output from the MUX 610 to reduce the PAPR. The second PAPR remover 620 injects the reservation tone of the size determined by the reservation tone controller 640 to the location of the reservation tone determined by the reservation tone controller 640.

The power amplifier 630 amplifies and outputs the power of the broadcasting signal so as to transmit the broadcasting signal output from the second PAPR controller 620 to the receiving stage through the radio resource.

Although not illustrated, the transmitting stage further includes a transmitting means for transmitting control information to a receiving stage. The control information includes at least one of the location and size information of the reservation tones of the channel band and the whole broadcasting band.

As described above, the transmitting stage includes the plurality of the transmitters 600-1 through 600-N for transmitting the signal over the respective frequencies.

Alternatively, the transmitting stage may include only one transmitter for processing the broadband signal. For example, the transmitting stage would include the first transmitter 600-1, the MUX 610, the second PAPR remover 620, the power amplifier 630, and the reservation tone controller 640. The transmitting stage would also include an RF processor for dividing the frequency band to generate the broadcasting signal per channel band. Herein, the RF processor up-converts the baseband signal to the RF signal.

Alternatively, the transmitting stage may include a plurality of RF processers in one transmitter. In this embodiment of the present invention, the transmitting stage includes a switch for interconnecting the power amplifier 630 and the RF processors.

A structure of the receiving stage for receiving the broadcasting signal is described in detail below.

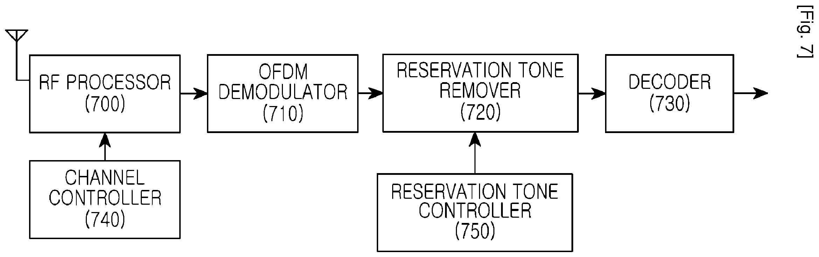

FIG. 7 is a block diagram illustrating a receiving stage in the broadcasting communication system, according to an embodiment of the present invention.

As shown in FIG. 7, the receiving stage includes an RF processor 700, an OFDM demodulator 710, a reservation tone remover 720, a decoder 730, a channel controller 740, and a reservation tone controller 750.

The RF processor 700 down-converts the RF signal received via an antenna to the baseband signal. In so doing, the RF processor 700 receives the signal of the frequency band for reception of the broadcasting service under control of the channel controller 740. For example, the RF processor 700 includes, for example, a tuner, an amplifier, a mixer, an oscillator, and an Analog to Digital Converter (ADC). The tuner tunes the reception frequency band to receive only the signal of the channel to be provided to a user of the receiving stage from the whole broadcasting band under control of the channel controller 740.

The channel controller 740 controls the RF processor 700 to receive only the signal of the channel band of the broadcasting service to service the user of the receiving stage. For example, the channel controller 740 identifies the channel band of the broadcasting service to be provided to the user according to the preset channel band information per broadcasting service. The channel controller 740 can identify the channel band of the broadcasting service to be provided to the user based on the control information received from the transmitting stage.

The OFDM demodulator 710 restores the symbols mapped to the frequency domain by applying the FFT to the signal output from the RF processor 700.

The reservation tone remover 720 removes the reservation tone in the frequency-domain signal output from the OFDM demodulator 710 under control of the reservation tone controller 750.

The reservation tone controller 750 locates the reservation tone injected by the transmitting stage in order to remove the PAPR, and controls the reservation tone remover 720 to remove the reservation tone from the corresponding location. For example, when the location of the reservation tone is preset, the reservation tone controller 750 controls the reservation tone remover 720 to remove the reservation tone at the preset location. When the transmitting stage determines the location of the reservation tone, the reservation tone controller 750 may control the reservation tone remover 720 to remove the reservation tone at the location obtained in the control information received from the transmitting stage. In so doing, the reservation tone controller 750 controls removal of any one of the reservation tone of the channel band, the reservation tone of the whole receivable band, and the combined reservation tone of the reservation tone of the channel band and the reservation tone of the whole broadcasting band.

The decoder 730 compensates for distortion of the data symbols output from the reservation tone remover 720, and restores packets including the broadcasting data by demodulating and channel-decoding the data symbols.

Performance change that occurs when the reservation tone optimized per channel band is injected is described in detail below.

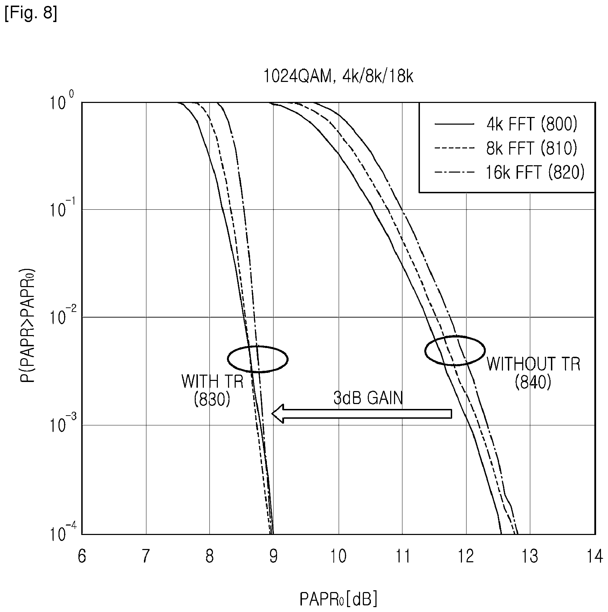

FIG. 8 is a graph of the performance change, according to an embodiment of the present invention. Herein, the TR is Tone Reservation.

In FIG. 8, the PAPR performance of a first system 800 using a 4MHz band, the PAPR performance of a second system 810 using an 8MHz band, and the PAPR performance of a third system 820 using a 16MHz band are compared. It is assumed that the first system 800 includes four channel bands of 1MHz, the second system 810 includes four channel bands of 2MHz, and the third system 820 includes four channel bands of 4MHz.

When the reservation tone 830 is injected into the channel band and the whole broadcasting band as shown in FIG. 2 or FIG. 3, PAPR reduction gain of 3dB can be achieved, compared to the absence of the reservation tone 840.

As set forth above, the transmitting stage of the broadcasting communication system reduces the PAPR per channel band for the broadcasting service. Therefore, the PAPR of the channel bands can be reduced according to the data slicing.

While the invention has been shown and described with reference to certain embodiments thereof, it will be understood by those skilled in the art that various changes in form and detail may be made therein without departing from the scope of the invention as defined by the appended claims and their equivalents.

## Claims

1. A method for transmitting an integrated broadcasting signal at a transmitting stage in a broadcasting communication system, which provides a broadcasting service by dividing a broadcasting band into at least two channel bands, the method comprising:
inserting (209) at least one primary reservation tone into each of broadcasting signals;
generating (211) the integrated broadcasting signal by combining the broadcasting signals;
inserting (213) at least one secondary reservation tone into the integrated broadcasting signal; and
transmitting (215) the integrated broadcasting signal, to a receiving stage in the broadcasting communication system,
wherein each of the broadcasting signals is a signal for one of the at least two channel bands, and
wherein the integrated broadcasting signal is a signal for the broadcasting band.

2. The method of claim 1, further comprising:
transmitting at least one of location information and size information of the at least one primary reservation tone and the at least one secondary reservation tone, to the receiving stage.

3. An apparatus for transmitting an integrated broadcasting signal at a transmitting stage in a broadcasting communication system, which provides a broadcasting service by dividing a broadcasting band into at least two channel bands, the apparatus comprising:
a first peak to average power ratio, PAPR, remover (507) configured to insert at least one primary reservation tone into each of broadcasting signals;
a multiplexer (510) configured to generate the integrated broadcasting signal by combining the broadcasting signals;
a second PAPR remover (520) configured to insert at least one secondary reservation tone into the integrated broadcasting signal; and
a transmitter configured to transmit the integrated broadcasting signal, to a receiving stage in the broadcasting communication system,
wherein each of the broadcasting signals is a signal for one of the at least two channel bands, and
wherein the integrated broadcasting signal is a signal for the broadcasting band.

4. The apparatus of claim 3, wherein the transmitter is further configured to transmit at least one of location information and size information of the at least one primary reservation tone and the at least one secondary reservation tone, to the receiving stage.

5. The method of claim 1 or the apparatus of claim 3,
wherein the at least one primary reservation tone and the at least one secondary reservation tone have different locations and different sizes.

6. The method of claim 1 or the apparatus of claim 3,
wherein the at least one primary reservation tone and the at least one secondary reservation tone have different locations and the same size.

7. The method of claim 1 or the apparatus of claim 3,
wherein the at least one primary reservation tone and the at least one secondary reservation tone have the same location and different sizes.

8. A method for receiving an integrated broadcasting signal in a broadcasting communication system, which provides a broadcasting service by dividing a broadcasting band into at least two channel bands, the method comprising:
identifying (401), among the at least two channel bands, a channel band of the provided broadcasting service;
if receiving (403) a broadcasting signal among a plurality of broadcasting signals included in the integrated broadcasting signal over the channel band, removing (405) at least one reservation tone from the broadcasting signal; and
restoring (407) broadcasting data based on the broadcasting signal from which the at least one reservation tone is removed,
wherein the at least one reservation tone comprises at least one primary reservation tone and at least one secondary reservation tone,
wherein the at least one primary reservation tone is inserted into each of the plurality of broadcasting signals, and
wherein the at least one secondary reservation tone is inserted into the integrated broadcasting signal.

9. The method of claim 8, further comprising:
receiving at least one of location information for the at least one reservation tone and size information for the at least one reservation tone, and
wherein removing the at least one reservation tone comprises removing the at least one reservation tone based on at least one of the location information and the size information.

10. An apparatus for receiving an integrated broadcasting signal in a broadcasting communication system, which provides a broadcasting service by dividing a broadcasting band into at least two channel bands, the apparatus comprising:
a receiver (700);
a channel controller (740) configured to identify a channel band of the provided broadcasting service;
a reservation tone remover (720) configured to remove at least one reservation tone from a broadcasting signal, if receiving, through the receiver, the broadcasting signal among a plurality of broadcasting signals included in the integrated broadcasting signal over the channel band; and
a decoder (730) configured to restore broadcasting data based on the broadcasting signal from which the at least one reservation tone is removed,
wherein the at least one reservation tone comprises at least one primary reservation tone and at least one secondary reservation tone,
wherein the at least one primary reservation tone is inserted into each of the plurality of broadcasting signals, and
wherein the at least one secondary reservation tone is inserted into the integrated broadcasting signal.

11. The apparatus of claim 10, wherein the receiver is further configured to receive at least one of location information for the at least one reservation tone and size information for the at least one reservation tone, and
wherein the reservation tone remover is configured to remove the at least one reservation tone based on at least one of the location information and the size information.

## Patentansprüche

1. Verfahren zum Senden eines integrierten Rundsendesignals bei einer Sendestufe in einem Rundsendekommunikationssystem, das einen Rundsendedienst durch Teilen eines Rundsendebandes in mindestens zwei Kanalbänder bereitstellt, wobei das Verfahren Folgendes umfasst:
Einfügen (209) mindestens eines primären Reservierungstones in jedes der Rundsendesignale;
Erzeugen (211) des integrierten Rundsendesignals durch Kombinieren der Rundsendesignale;
Einfügen (213) mindestens eines sekundären Reservierungstones in das integrierte Rundsendesignal und
Senden (215) des integrierten Rundsendesignals zu einer Empfangsstufe im Rundsendekommunikationssystem,
wobei jedes der Rundsendesignale ein Signal für eines der mindestens zwei Kanalbänder ist und
wobei das integrierte Rundsendesignal ein Signal für das Rundsendeband ist.

2. Verfahren nach Anspruch 1, das ferner Folgendes umfasst:
Senden mindestens eines von Ortsinformationen und Größeninformationen des mindestens einen primären Reservierungstones und des mindestens einen sekundären Reservierungstones zur Empfangsstufe.

3. Vorrichtung zum Senden eines integrierten Rundsendesignals bei einer Sendestufe in einem Rundsendekommunikationssystem, das einen Rundsendedienst durch Teilen eines Rundsendebandes in mindestens zwei Kanalbänder bereitstellt, wobei die Vorrichtung Folgendes umfasst:
einen ersten Entferner des Verhältnisses von Spitzenzu Durchschnittsleistung, Peak to Average Power Ratio, PAPR-Entferner (507), der konfiguriert ist, mindestens einen primären Reservierungston in jedes der Rundsendesignale einzufügen;
einen Multiplexer (510), der konfiguriert ist, das integrierte Rundsendesignal durch Kombinieren der Rundsendesignale zu erzeugen;
einen zweiten PAPR-Entferner (520), der konfiguriert ist, mindestens einen sekundären Reservierungston in das integrierte Rundsendesignal einzufügen; und
einen Sender, der konfiguriert ist, das integrierte Rundsendesignal zu einer Empfangsstufe im Rundsendekommunikationssystem zu senden,
wobei jedes der Rundsendesignale ein Signal für eines der mindestens zwei Kanalbänder ist und
wobei das integrierte Rundsendesignal ein Signal für das Rundsendeband ist.

4. Vorrichtung nach Anspruch 3, wobei der Sender ferner konfiguriert ist, mindestens eines von Ortsinformationen und Größeninformationen des mindestens einen primären Reservierungstones und des mindestens einen sekundären Reservierungstones zur Empfangsstufe zu senden.

5. Verfahren nach Anspruch 1 oder Vorrichtung nach Anspruch 3,
wobei der mindestens eine primäre Reservierungston und der mindestens eine sekundäre Reservierungston unterschiedliche Orte und unterschiedliche Größen aufweisen.

6. Verfahren nach Anspruch 1 oder Vorrichtung nach Anspruch 3,
wobei der mindestens eine primäre Reservierungston und der mindestens eine sekundäre Reservierungston unterschiedliche Orte und dieselbe Größe aufweisen.

7. Verfahren nach Anspruch 1 oder Vorrichtung nach Anspruch 3,
wobei der mindestens eine primäre Reservierungston und der mindestens eine sekundäre Reservierungston denselben Ort und unterschiedliche Größen aufweisen.

8. Verfahren zum Empfangen eines integrierten Rundsendesignals in einem Rundsendekommunikationssystem, das einen Rundsendedienst durch Teilen eines Rundsendebandes in mindestens zwei Kanalbänder bereitstellt, wobei das Verfahren Folgendes umfasst:
Identifizieren (401) eines Kanalbandes des bereitgestellten Rundsendedienstes unter den mindestens zwei Kanalbändern;
wenn ein Rundsendesignal unter mehreren Rundsendesignalen, die im integrierten Rundsendesignal beinhaltet sind, über das Kanalband empfangen wird (403), Entfernen (405) mindestens eines Reservierungstones aus dem Rundsendesignal und
Wiederherstellen (407) von Rundsendedaten basierend auf dem Rundsendesignal, aus dem der mindestens eine Reservierungston entfernt worden ist,
wobei der mindestens eine Reservierungston mindestens einen primären Reservierungston und mindestens einen sekundären Reservierungston umfasst,
wobei der mindestens eine primäre Reservierungston in jedes der mehreren Rundsendesignale eingefügt ist und
wobei der mindestens eine sekundäre Reservierungston in das integrierte Rundsendesignal eingefügt ist.

9. Verfahren nach Anspruch 8, das ferner Folgendes umfasst:
Empfangen mindestens eines von Ortsinformationen für den mindestens einen Reservierungston und Größeninformationen für den mindestens einen Reservierungston, und
wobei Entfernen des mindestens einen Reservierungstones Entfernen des mindestens einen Reservierungstones basierend auf mindestens einem der Ortsinformationen und der Größeninformationen umfasst.

10. Vorrichtung zum Empfangen eines integrierten Rundsendesignals in einem Rundsendekommunikationssystem, das einen Rundsendedienst durch Teilen eines Rundsendebandes in mindestens zwei Kanalbänder bereitstellt, wobei die Vorrichtung Folgendes umfasst:
einen Empfänger (700);
eine Kanalsteuerung (740), die konfiguriert ist, ein Kanalband des bereitgestellten Rundsendedienstes zu identifizieren;
einen Reservierungstonentferner (720), der konfiguriert ist, mindestens einen Reservierungston aus einem Rundsendesignal zu entfernen, wenn das Rundsendesignal unter mehreren Rundsendesignalen, die im integrierten Rundsendesignal beinhaltet sind, über das Kanalband über den Empfänger empfangen wird; und
einen Decodierer (730), der konfiguriert ist, Rundsendedaten basierend auf dem Rundsendesignal wiederherzustellen, aus dem der mindestens eine Reservierungston entfernt worden ist,
wobei der mindestens eine Reservierungston mindestens einen primären Reservierungston und mindestens einen sekundären Reservierungston umfasst,
wobei der mindestens eine primäre Reservierungston in jedes der mehreren Rundsendesignale eingefügt ist und
wobei der mindestens eine sekundäre Reservierungston in das integrierte Rundsendesignal eingefügt ist.

11. Vorrichtung nach Anspruch 10, wobei der Empfänger ferner konfiguriert ist, mindestens eines von Ortsinformationen für den mindestens einen Reservierungston und Größeninformationen für den mindestens einen Reservierungston zu empfangen, und
wobei der Reservierungstonentferner konfiguriert ist, den mindestens einen Reservierungston basierend auf mindestens einem der Ortsinformationen und der Größeninformationen zu entfernen.

## Revendications

1. Procédé de transmission d'un signal de diffusion intégré à un étage de transmission dans un système de communication de diffusion, qui fournit un service de diffusion par la division d'une bande de diffusion en au moins deux bandes de canal, le procédé comprenant :
l'insertion (209) d'au moins une tonalité de réservation primaire dans chacun de signaux de diffusion ;
la génération (211) du signal de diffusion intégré par la combinaison des signaux de diffusion ;
l'insertion (213) d'au moins une tonalité de réservation secondaire dans le signal de diffusion intégré ; et
la transmission (215) du signal de diffusion intégré à un étage de réception dans le système de communication de diffusion,
dans lequel chacun des signaux de diffusion est un signal pour l'une des au moins deux bandes de canal, et
dans lequel le signal de diffusion intégré est un signal pour la bande de diffusion.

2. Procédé selon la revendication 1, comprenant en outre :
la transmission d'au moins l'une d'informations d'emplacement et d'informations de taille de l'au moins une tonalité de réservation primaire et de l'au moins une tonalité de réservation secondaire, à l'étage de réception.

3. Appareil de transmission d'un signal de diffusion intégré à un étage de transmission dans un système de communication de diffusion, qui fournit un service de diffusion par la division d'une bande de diffusion en au moins deux bandes de canal, l'appareil comprenant :
un premier suppresseur de rapport de pointe sur puissance moyenne, PAPR, (507) configuré pour l'insertion d'au moins une tonalité de réservation primaire dans chacun de signaux de diffusion ;
un multiplexeur (510) configuré pour la génération du signal de diffusion intégré par la combinaison des signaux de diffusion ;
un deuxième suppresseur PAPR (520) configuré pour l'insertion d'au moins une tonalité de réservation secondaire dans le signal de diffusion intégré ; et
un émetteur configuré pour la transmission du signal de diffusion intégré, à un étage de réception dans le système de communication de diffusion,
dans lequel chacun des signaux de diffusion est un signal pour l'une des au moins deux bandes de canal, et
dans lequel le signal de diffusion intégré est un signal pour la bande de diffusion.

4. Appareil selon la revendication 3, dans lequel l'émetteur est en outre configuré pour la transmission d'au moins l'une d'informations d'emplacement et d'informations de taille de l'au moins une tonalité de réservation primaire et de l'au moins une tonalité de réservation secondaire, à l'étage de réception.

5. Procédé selon la revendication 1 ou appareil selon la revendication 3,
dans lequel l'au moins une tonalité de réservation primaire et l'au moins une tonalité de réservation secondaire ont des emplacements différents et des tailles différentes.

6. Procédé selon la revendication 1 ou appareil selon la revendication 3,
dans lequel l'au moins une tonalité de réservation primaire et l'au moins une tonalité de réservation secondaire ont des emplacements différents et la même taille.

7. Procédé selon la revendication 1 ou appareil selon la revendication 3,
dans lequel l'au moins une tonalité de réservation primaire et l'au moins une tonalité de réservation secondaire ont le même emplacement et des tailles différentes.

8. Procédé de réception d'un signal de diffusion intégré dans un système de communication de diffusion, qui fournit un service de diffusion par la division d'une bande de diffusion en au moins deux bandes de canal, le procédé comprenant :
l'identification (401), parmi les au moins deux bandes de canal, d'une bande de canal du service de diffusion fourni ;
si la réception (403) d'un signal de diffusion parmi une pluralité de signaux de diffusion inclus dans le signal de diffusion intégré sur la bande de canal, la suppression (405) d'au moins une tonalité de réservation à partir du signal de diffusion ; et
la restauration (407) de données de diffusion sur la base du signal de diffusion duquel l'au moins une tonalité de réservation est supprimée,
dans lequel au moins une tonalité de réservation comprend au moins une tonalité de réservation primaire et au moins une tonalité de réservation secondaire,
dans lequel l'au moins une tonalité de réservation primaire est insérée dans chacun de la pluralité de signaux de diffusion, et
dans lequel l'au moins une tonalité de réservation secondaire est insérée dans le signal de diffusion intégré.

9. Procédé selon la revendication 8, comprenant en outre :
la réception d'au moins l'une d'informations d'emplacement pour l'au moins une tonalité de réservation et d'informations de taille pour l'au moins une tonalité de réservation, et
dans lequel la suppression de l'au moins une tonalité de réservation comprend la suppression de l'au moins une tonalité de réservation sur la base d'au moins l'une des informations d'emplacement et des informations de taille.

10. Appareil de réception d'un signal de diffusion intégré dans un système de communication de diffusion, qui fournit un service de diffusion par la division d'une bande de diffusion en au moins deux bandes de canal, l'appareil comprenant :
un récepteur (700) ;
un organe de commande de canal (740) configuré pour l'identification d'une bande de canal du service de diffusion fourni ;
un suppresseur de tonalité de réservation (720) configuré pour la suppression d'au moins une tonalité de réservation à partir d'un signal de diffusion, si la réception, par l'intermédiaire du récepteur, du signal de diffusion parmi une pluralité de signaux de diffusion inclus dans le signal de diffusion intégré sur la bande de canal ; et
un décodeur (730) configuré pour la restauration de données de diffusion sur la base du signal de diffusion duquel l'au moins une tonalité de réservation est supprimée,
dans lequel au moins une tonalité de réservation comprend au moins une tonalité de réservation primaire et au moins une tonalité de réservation secondaire,
dans lequel l'au moins une tonalité de réservation primaire est insérée dans chacun de la pluralité de signaux de diffusion, et
dans lequel l'au moins une tonalité de réservation secondaire est insérée dans le signal de diffusion intégré.

11. Appareil selon la revendication 10, dans lequel le récepteur est en outre configuré pour la réception d'au moins l'une d'informations d'emplacement pour l'au moins une tonalité de réservation et d'informations de taille pour l'au moins une tonalité de réservation, et dans lequel le suppresseur de tonalité de réservation est configuré pour la suppression de l'au moins une tonalité de réservation sur la base d'au moins l'une des informations d'emplacement et des informations de taille.
